# EUROPEAN PATENT SPECIFICATION

(11) **EP 4 123 177 B1**
(45) Date of publication and mention of the grant of the patent: **26.08.2026**
(21) Application number: 22186567.8
(22) Date of filing: 22.07.2022
(51) Int. Cl.: F04C 2/344, F04C 14/22

(54) **VARIABLE DISPLACEMENT PUMP SYSTEMS WITH DIRECT ACTUATION**
VERSTELLPUMPENSYSTEME MIT DIREKTER BETÄTIGUNG
SYSTÈMES DE POMPES À DÉPLACEMENT VARIABLE AVEC ACTIONNEMENT DIRECT

(30) Priority: 23.07.2021 US 202117384466
(43) Date of publication of application: 25.01.2023
(73) Proprietor: Hamilton Sundstrand Corporation, Charlotte, NC 28217-4578 (US)
(72) Inventor: GOY, Edward W., Crystal Lake, 60014 (US)
(74) Representative: Dehns

(56) References cited:
- EP-A2- 1 262 664
- EP-A2- 2 138 718
- EP-B1- 0 652 370
- EP-B1- 1 384 005
- DE-A1- 102014 221 447
- US-A1- 2003 031 567
- US-A1- 2010 166 588
- US-A1- 2018 230 870

## Description

### FIELD

This disclosure relates to variable displacement pumps.

### BACKGROUND

Typical variable displacement pumps (e.g., for aircraft fuel systems) have complex hydraulic controls. However, these controls are indirect and present a lag between input and output, as well as reliability issues. Variable displacement pumps are also known from EP 0652370 B1, EP 2 138 718 A2, EP 1 262 664 A2, US 2018/230870 A1, US 2003/031567 A1 and DE 10 2014 221447 A1. EP 1384005 B1 and US 2010/0166588 A1 provide variable displacement pumps with rotating cam rings with a cam sleeve or housing.

Such conventional systems have generally been considered satisfactory for their intended purpose. However, there is still a need in the art for improved variable displacement pump systems. The present disclosure provides a solution for this need.

### SUMMARY

In accordance with one aspect of the invention, a variable displacement pump is provided as defined by claim 1. In certain embodiments, the pump can include a biasing member configured to provide an opposing force to a direction of force applied by the direct actuation mechanism to bias the retainer in a bias direction.

In certain embodiments, the bias direction can be a maximum pumping action direction.

In certain embodiments, the direct actuation mechanism includes a first arm and a second arm disposed on opposite sides of the tab. The first arm and second arm can be configured to have complimentary actuation such that extension of the first arm causes retraction of the second arm to control the position of the retainer without a biasing member on the retainer.

In accordance with another aspect of the invention, a fuel pump system for an aircraft is provided as defined by claim 5.

In accordance with at a further aspect of the invention, a method for controlling pumping action of a variable displacement pump is provided as defined by claim 6.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1A is a schematic cross-sectional diagram showing an embodiment of a pump in accordance with this disclosure, showing a retainer positioned in a no-displacement position;
Fig. 1B is a schematic cross-sectional diagram of the embodiment of Fig. 1, showing a retainer in a maximum displacement position;
Fig. 2A is a schematic cross-sectional diagram of a pump;
Fig. 2B is a schematic cross-sectional diagram of another embodiment of a pump in accordance with this disclosure;
Fig. 3 is a schematic diagram of an embodiment of a pump in accordance with this disclosure, shown in operation in two different states; and
Fig. 4 is a schematic diagram of an embodiment of a system in an aircraft in accordance with this disclosure.

### DETAILED DESCRIPTION

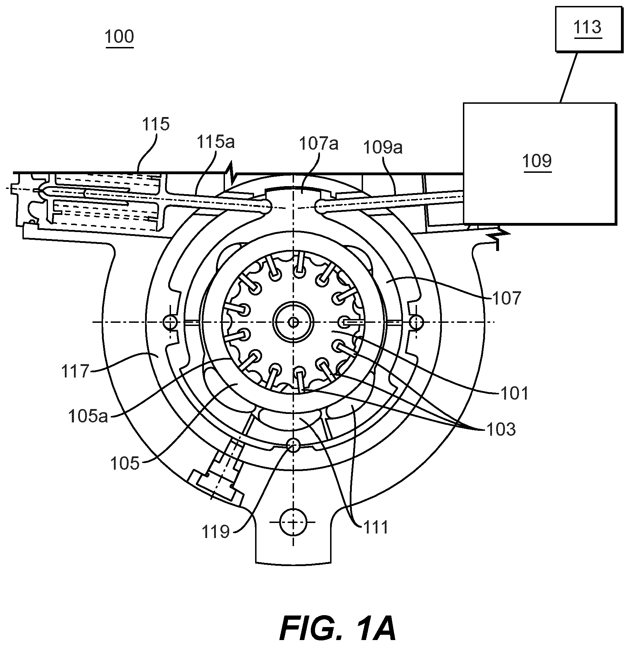

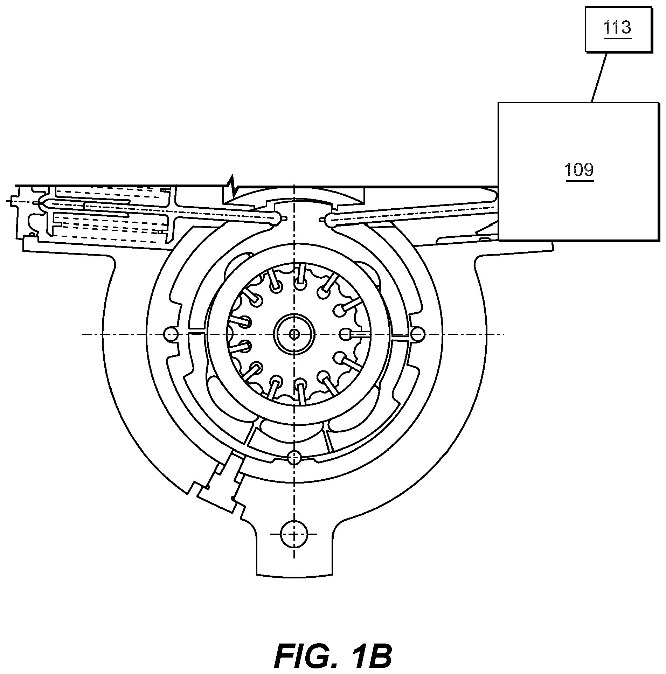

Reference will now be made to the drawings wherein like reference numerals identify similar structural features or aspects of the subject disclosure. For purposes of explanation and illustration, and not limitation, an illustrative view of an embodiment of a variable displacement pump in accordance with the disclosure is shown in Fig. 1A and is designated generally by reference character 100. Other embodiments and/or aspects of this disclosure are shown in Figs. 1B-4.

Referring to Figs. 1A and 1B, a variable displacement pump 100 can include a rotor 101 having a plurality of vanes 103 disposed therein. The pump 100 also includes a cam ring 105 surrounding the rotor 101 and vanes 103. The vanes 103 can be configured to extend from the rotor 101 and contact an inner cam surface 105a of the cam ring 105. The vanes 103 can be configured to slide radially relative to the rotor 101 to contact the inner cam surface 105a. The vanes 103 can be outwardly biased.

In certain embodiments, the cam ring 105 can be a rotating ring configured to reduce relative motion between the vanes 103 and the cam ring 105. This can reduce frictional losses without affecting pumping action as appreciated by those having ordinary skill in the art in view of this disclosure. A stationary cam ring or any other suitable cam ring is also contemplated herein.

The pump 100 can include a retainer 107 configured to contact the cam ring 105 and to move the cam ring 105 relative to the rotor 101 to modify a pumping action. The pump 100 can also include a direct actuation mechanism 109 configured to control a position of the retainer 107 to control a position of the cam ring 105 and the pumping action (e.g., the displacement of the pump 100). For example, the retainer 107 can surround the cam ring 105 and include any suitable number of pieces. One or more tilting pad bearings 111 can be disposed between the cam ring 105 and the retainer 107.

As shown in Fig. 1, the direct actuation mechanism 109 is an electrohydraulic servo valve (EHSV) in direct hydraulic communication with the retainer 105 via a hydraulic piston (e.g., arm 109a). The EHSV can be controlled via an electrical input to set the pressure observed by the hydraulic piston which is in direct mechanical connection with the retainer. The EHSV can receive current from an engine controller which can set the demanded amount of flow, for example. Based on the current, the EHSV can send along some mixture of pressure between inlet and discharge pressure to the actuator piston. The actuator piston will move if the pressure*area results in enough force to overcome the spring load (e.g., and miscellaneous friction forces) and will reduce the flow (therefore reducing discharge pressure). A traditional vane pump needed to include pressure compensation valves in the system to try to adjust the actuator piston location hydraulically. However, instead of utilizing pressure compensation valves, for example, EHSVs can now control the actuator piston directly rather than with pressure compensation valves also being required in the system. In this regard, the EHSV can be directly hydraulically communicated to the actuator piston. Any suitable hydraulic control assembly to directly hydraulically control the arm 109a is contemplated herein.

Referring to Figs. 1A-2, the pump 100, 200 includes a controller 113 configured to directly control the direct actuation mechanism 109, 209, 210 to achieve a desired pumping action (e.g., to modify displacement between no displacement, e.g., as shown in Fig. 1A, and a maximum displacement, e.g., as shown in Fig. 1B). The controller 113 can include any suitable hardware and/or software module(s) as appreciated by those having ordinary skill in the art. Certain embodiments can include one or more feedback sensors, e.g., a position sensor on the actuator arm 109a or on the pivot pin (described below) to determine what the displacement and/or pump pressure should be. Embodiments of a controller 113 can control the EHSV based on a position sensor, for example. The controller 113 can be configured to cross-check the sensor readings with actual flow pressure, for example.

Certain embodiments can utilize differential pressure transducers that read the difference between the inlet and discharge pressures to provide feedback to the controller 113. The controller 113 can then change the current to the EHSV to directly change the displacement of the pump 100 to reach the demanded pressure via displacement changes.

The pump 100 includes a biasing member 115 configured to provide an opposing force to a direction of force applied by the direct actuation mechanism 109 to bias the retainer 107 in a bias direction (e.g., toward maximum displacement such that in the event of failure, maximum pumping action is provided). This can allow actuation from a single side of the retainer 107 and provide a desired failure mode.

The pump 100 includes a housing 117 (e.g., that surrounds the retainer 107). The retainer 107 is disposed on a pivot pin 119 at a pivot location (e.g., a bottom) between the retainer 107 and the housing 117 to allow the retainer to pivot relative to the housing 117.

The retainer 107 includes a tab 107a opposite or otherwise located apart from the pivot location. The tab 107a is configured to interact with an arm 109a of the direct actuation mechanism 109 to allow the direct actuation mechanism 109 to apply a force to the tab 107a to rotate the retainer 107 about the pivot pin 119. A biasing member arm 115a is disposed on an opposite side of the tab 107a relative to the arm 109a of the direct actuation mechanism 109 to provide an opposing force to a direction of force applied by the direct actuation mechanism 109 to bias the retainer 107 in a bias direction (e.g., to a maximum displacement position). For example, as disclosed above, in certain embodiments, the bias direction can be a maximum pumping action direction.

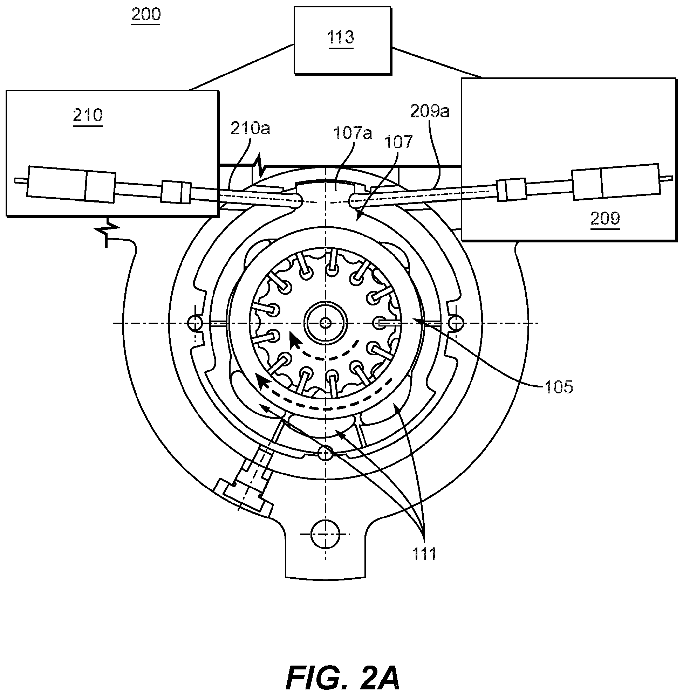

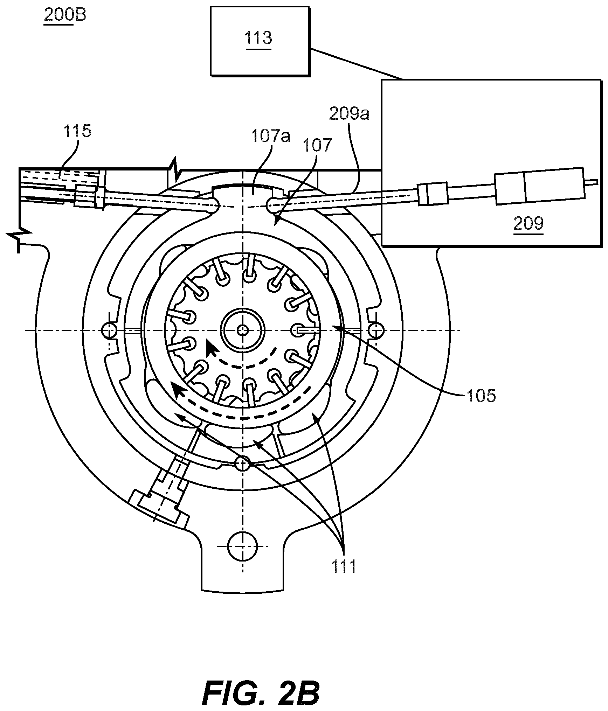

In certain embodiments, e.g., as shown in Fig. 2A, the direct actuation mechanism 209, 210 includes a first arm 209a and a second arm 210a disposed on opposite sides of the tab 107a. The first arm 209a and second arm 210a can be configured to have complimentary actuation such that extension of the first arm 209a causes retraction of the second arm 210a to control the position of the retainer 107 without a biasing member (e.g., as shown in Fig. 1A) on the retainer 107. In certain embodiments, as shown in Fig. 2B, the system 200B can include a single side of direct actuation mechanism (e.g., just mechanism 209, e.g., a single screw actuator or rack and pinion or a servo, etc.) to control the displacement (e.g., with a spring as shown, or with nothing on the other side to resist or move in opposite parallel). Also, the second direct actuation mechanism 210 as shown in the embodiment of Fig. 2A can be replaced with a follower assembly that is passive to aid in guiding and/or limiting motion of the actuation mechanism 209.

In certain embodiments, as shown in Fig. 2B, the system 200B can be implemented with a spring arrangement and only a single side actuation similar to that shown in Fig. 1, The spring can counteract the mechanism and improve minimum to maximum displacement times, for example. Any suitable arrangement is contemplated herein.

Also, in certain embodiments, single side control of the embodiment of Fig. 1 is also contemplated.

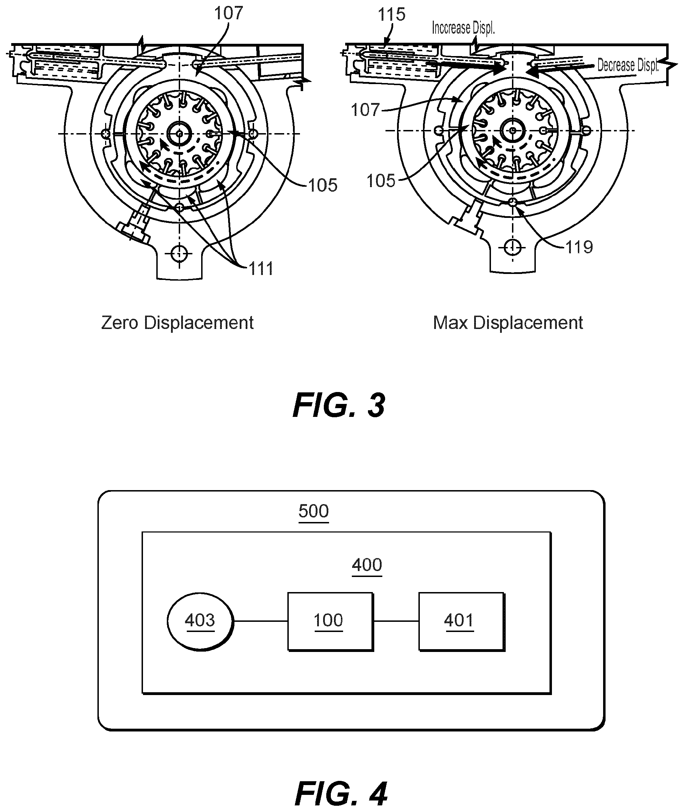

In accordance with at least one aspect of this disclosure, a method for controlling pumping action of a variable displacement pump can include directly controlling a position of a retainer to directly control pumping action of the pump using an electrohydraulic servo valve (EHSV). For example, as shown in Fig. 3, the rotor 101 can be rotated (as well as the cam ring 105 as shown). To increase displacement from the zero displacement position as shown on the left of Fig. 3, the tab 107a on the retainer 107 can be moved to the right up to the maximum displacement position shown on the right of Fig. 3. Decreasing displacement (and thus pumping action) can be effected be moving the retainer 107 to the left. The method can include any other suitable method(s) and/or portion(s) thereof.

In accordance with at least one aspect of this disclosure, as shown in Fig. 4, a fuel pump system 400 for an aircraft 500 can include a fuel circuit 401 and a variable displacement pump 100 connected to the fuel circuit 401 (e.g., to pump fuel to an engine 403). The pump can be any suitable pump (e.g., pump 100, 200) disclosed herein, e.g., as described above. Any other suitable pump application is contemplated herein.

Traditional systems employ a complex hydraulic feedback loop to control displacement of variable displacement pumps. Embodiments enable direct control with a controller (e.g., an engine controller or any other suitable controller) which was not traditionally possible.

Embodiments utilize an EHSV instead of complex hydraulic network. An EHSV can utilize an existing hydraulic piston actuator from a traditional system, but allow for direct selective actuation with the EHSV. Direct feedback control is also enabled.

Embodiments can allow for removal of typical hydraulic controls and valving, and utilize incorporation of an electro-hydraulic servo valve (EHSV) that directly supplies pressure to the actuator piston within the variable vane pump. Differential pressure transducers reading the difference between the inlet and discharge pressures can be used to provide feedback to the controller (e.g., an engine controller). The controller could then change the current to the EHSV to directly change the displacement of the pump to reach the demanded pressure via displacement changes.

Accordingly, EHSVs can be sized such that they could provide direct hydraulic control to the actuator piston within the variable displacement vane pump, and thus, directly controlling the displacement of the pump. Embodiments of a pump no longer need to rely on complex hydraulic controls and can now be directly controlled by the engine controllers via a pressure feedback loop or a calculated required displacement vs a measured location (and thus displacement) via a position sensing mechanism such as an LVDT which measures the location of the retainer to determine the displacement.

Embodiments provide direct input to control the displacement of the pump can allow for direct metering of flow and more direct engine motor control over pump flow. Embodiments provide variable displacement vane pump direct displacement control, e.g., direct actuation control of a variable displacement vane pump.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as defined by the claims.

## Claims

1. A variable displacement pump, comprising:
a rotor (101) having a plurality of vanes (103);
a cam ring (105) surrounding the rotor and vanes, the vanes configured to extend from the rotor and contact an inner cam surface (105a) of the cam ring; and
a retainer (107) configured to contact the cam ring and to move the cam ring relative to the rotor to modify a pumping action;
a direct actuation mechanism (109) configured to control a position of the retainer to control a position of the cam ring and the pumping action;
a housing (117);
wherein the retainer is disposed on a pivot pin at a pivot location between, on, or in the retainer and the housing to allow the retainer to pivot relative to the housing; and
wherein the retainer includes a tab (107a) opposite or otherwise located apart from the pivot location, the tab configured to interact with an arm of the direct actuation mechanism to allow the direct actuation mechanism to apply a force to the tab to rotate the retainer about the pivot pin;
a biasing member arm (115a) disposed on an opposite side of the tab relative to the arm of the direct actuation mechanism to provide an opposing force to a direction of force applied by the direct actuation mechanism to bias the retainer in a bias direction; the variable displacement pump being **characterized in that** the direct actuation mechanism is an electrohydraulic servo valve, EHSV, in direct hydraulic communication with the retainer via a hydraulic piston (109a); and by further comprising:
a controller (113) configured to directly control the direct actuation mechanism to achieve a desired pumping action.

2. The pump of claim 1, further comprising a biasing member (115) configured to provide an opposing force to a direction of force applied by the direct actuation mechanism to bias the retainer in a bias direction.

3. The pump of any preceding claim, wherein the bias direction is a maximum pumping action direction.

4. The pump of any preceding claim, wherein the direct actuation mechanism includes a first arm (209a) and a second arm (210a) disposed on opposite sides of the tab, wherein the first arm and second arm are configured to have complimentary actuation such that extension of the first arm causes retraction of the second arm to control the position of the retainer without a biasing member on the retainer.

5. A fuel pump system for an aircraft, comprising:
a fuel circuit (401); and
a variable displacement (100) pump as claimed in any preceding claim connected to the fuel circuit.

6. A method for controlling pumping action of the variable displacement pump of claim 1, comprising:
directly controlling a position of a retainer (107) to directly control pumping action of the pump using an electrohydraulic servo valve, EHSV.

## Patentansprüche

1. Verstellpumpe, umfassend:
einen Rotor (101) mit einer Vielzahl von Flügeln (103);
einen Nockenring (105), der den Rotor und die Flügel umschließt, wobei die Flügel so konfiguriert sind, dass sie sich vom Rotor erstrecken und eine innere Nockenfläche (105a) des Nockenrings berühren; und
einen Halter (107), der so konfiguriert ist, dass er mit dem Nockenring in Kontakt tritt und den Nockenring relativ zum Rotor bewegt, um eine Pumpwirkung zu verändern;
einen direkten Betätigungsmechanismus (109), der so konfiguriert ist, dass er eine Position des Halters steuert, um eine Position des Nockenrings und die Pumpwirkung zu steuern;
ein Gehäuse (117);
wobei der Halter an einem Drehzapfen an einer Drehstelle zwischen, auf oder in dem Halter und dem Gehäuse angeordnet ist, um ein Schwenken des Halters relativ zum Gehäuse zu ermöglichen; und
wobei der Halter eine Lasche (107a) aufweist, die der Drehstelle gegenüberliegt oder anderweitig davon entfernt angeordnet ist, wobei die Lasche so konfiguriert ist, dass sie mit einem Arm des direkten Betätigungsmechanismus interagiert, um es dem direkten Betätigungsmechanismus zu ermöglichen, eine Kraft auf die Lasche auszuüben, um den Halter um den Drehzapfen zu drehen;
einen Vorspannelementarm (115a), der auf der dem Arm des direkten Betätigungsmechanismus gegenüberliegenden Seite der Lasche angeordnet ist, um eine der Richtung der vom direkten Betätigungsmechanismus ausgeübten Kraft entgegenwirkende Kraft zu erzeugen, um den Halter in eine Vorspannrichtung vorzuspannen; die Verstellpumpe ist **dadurch gekennzeichnet, dass** der direkte Betätigungsmechanismus ein elektrohydraulisches Servoventil, EHSV, ist, das über einen Hydraulikkolben (109a) in direkter hydraulischer Verbindung mit dem Halter steht; und dadurch, dass sie ferner umfasst:
einen Regler (113), der so konfiguriert ist, dass er den direkten Betätigungsmechanismus direkt steuert, um eine gewünschte Pumpwirkung zu erzielen.

2. Pumpe nach Anspruch 1, ferner umfassend ein Vorspannelement (115), das so konfiguriert ist, dass es eine der Richtung der vom direkten Betätigungsmechanismus ausgeübten Kraft entgegenwirkende Kraft erzeugt, um den Halter in eine Vorspannrichtung vorzuspannen.

3. Pumpe nach einem der vorhergehenden Ansprüche, wobei die Vorspannrichtung eine Richtung maximaler Pumpwirkung ist.

4. Pumpe nach einem der vorhergehenden Ansprüche, wobei der direkte Betätigungsmechanismus einen ersten Arm (209a) und einen zweiten Arm (210a) umfasst, die auf gegenüberliegenden Seiten der Lasche angeordnet sind, wobei der erste Arm und der zweite Arm so konfiguriert sind, dass sie eine komplementäre Betätigung aufweisen, sodass ein Ausfahren des ersten Arms ein Einfahren des zweiten Arms bewirkt, um die Position des Halters ohne ein Vorspannelement am Halter zu steuern.

5. Kraftstoffpumpensystem für ein Luftfahrzeug, umfassend:
einen Kraftstoffkreislauf (401); und
eine Verstellpumpe (100) nach einem der vorhergehenden Ansprüche, die mit dem Kraftstoffkreislauf verbunden ist.

6. Verfahren zur Steuerung der Pumpwirkung der Verstellpumpe nach Anspruch 1, umfassend:
Direktes Steuern einer Position eines Halters (107), um die Pumpwirkung der Pumpe mithilfe eines elektrohydraulischen Servoventils, EHSV, direkt zu steuern.

## Revendications

1. Pompe à cylindrée variable, comprenant :
un rotor (101) présentant une pluralité d'aubes (103) ;
une bague à came (105) entourant le rotor et les aubes, les aubes étant configurées pour s'étendre à partir du rotor et entrer en contact avec une surface de came interne (105a) de la bague à came ; et
un dispositif de retenue (107) configuré pour entrer en contact avec la bague à came et pour déplacer la bague à came par rapport au rotor afin de modifier une action de pompage ;
un mécanisme d'actionnement direct (109) configuré pour commander une position du dispositif de retenue afin de commander une position de la bague à came et l'action de pompage ;
un boîtier (117) ;
dans laquelle le dispositif de retenue est disposé sur un axe de pivotement au niveau d'un emplacement de pivotement entre, sur ou dans le dispositif de retenue et le boîtier afin de permettre au dispositif de retenue de pivoter par rapport au boîtier ; et
dans laquelle le dispositif de retenue comporte une languette (107a) opposée ou autrement située à l'écart de l'emplacement de pivotement, la languette étant configurée pour interagir avec un bras du mécanisme d'actionnement direct afin de permettre au mécanisme d'actionnement direct d'appliquer une force à la languette pour faire tourner le dispositif de retenue autour de l'axe de pivotement ;
un bras d'élément de sollicitation (115a) disposé d'un côté opposé de la languette par rapport au bras du mécanisme d'actionnement direct pour fournir une force opposée à une direction d'une force appliquée par le mécanisme d'actionnement direct afin de solliciter le dispositif de retenue dans une direction de sollicitation ; la pompe à cylindrée variable étant **caractérisée en ce que** le mécanisme d'actionnement direct est une servovalve électrohydraulique, EHSV, en communication hydraulique directe avec le dispositif de retenue par l'intermédiaire d'un piston hydraulique (109a) ; et **en ce qu'**elle comprend en outre :
un dispositif de commande (113) configuré pour commander directement le mécanisme d'actionnement direct afin d'obtenir une action de pompage souhaitée.

2. Pompe selon la revendication 1, comprenant en outre un élément de sollicitation (115) configuré pour fournir une force opposée à une direction d'une force appliquée par le mécanisme d'actionnement direct afin de solliciter le dispositif de retenue dans une direction de sollicitation.

3. Pompe selon l'une quelconque revendication précédente, dans laquelle la direction de sollicitation est une direction d'action de pompage maximale.

4. Pompe selon l'une quelconque revendication précédente, dans laquelle le mécanisme d'actionnement direct comporte un premier bras (209a) et un second bras (210a) disposés sur des côtés opposés de la languette, dans laquelle le premier bras et le second bras sont configurés pour présenter un actionnement complémentaire de sorte que l'extension du premier bras provoque la rétraction du second bras afin de commander la position du dispositif de retenue, sans élément de sollicitation sur le dispositif de retenue.

5. système de pompe à carburant pour un aéronef, comprenant :
un circuit de carburant (401) ; et
une pompe à cylindrée variable (100) selon l'une quelconque revendication précédente connectée au circuit de carburant.

6. Procédé de commande d'une action de pompage de la pompe à cylindrée variable selon la revendication 1, comprenant :
la commande directe d'une position d'un dispositif de retenue (107) pour commander directement une action de pompage de la pompe à l'aide d'une servovalve électrohydraulique, EHSV.
